# EUROPEAN PATENT SPECIFICATION

(11) **EP 1 507 110 B1**
(45) Date of publication and mention of the grant of the patent: **21.03.2007**
(21) Application number: 03728120.1
(22) Date of filing: 20.05.2003
(51) Int. Cl.: F16L 11/04, B32B 1/08, B32B 25/16, B32B 25/20

(54) **LAMINATED RUBBER HOSE**
LAMINIERTER GUMMISCHLAUCH
TUYAUX DE CAOUTCHOUC LAMINE

(30) Priority: 21.05.2002 JP 2002146329; 25.10.2002 JP 2002310922
(43) Date of publication of application: 16.02.2005
(73) Proprietor: ASAHI GLASS COMPANY LTD., Tokyo 100-8405 (JP)
(72) Inventor: KANEKO, Takeo c/o Asahi Glass Company, Limited, Ichihara-shi, Chiba 290-8566 (JP); TATE, Noriharu c/o Asahi Glass Company, Limited, Ichihara-shi, Chiba 290-8566 (JP); SUSA, Hitoshi c/o Asahi Glass Company, Limited, Ichihara-shi, Chiba 290-8566 (JP)
(74) Representative: Müller-Boré & Partner Patentanwälte
(86) International application number: PCT/JP2003/006270
(87) International publication number: WO 2003/098088

(56) References cited:
- EP-A- 0 862 996
- EP-A- 0 962 311
- WO-A-99/32557
- WO-A1-93/21466
- JP-A- 9 264 464
- JP-A- 2000 193 152
- JP-A- 2001 193 659
- US-A- 5 427 831

## Description

### TECHNICAL FIELD

The present invention relates to a laminated rubber hose comprising a fluororubber and a silicone rubber (EP-A-0 962 311).

### BACKGROUND ART

For a rubber hose used as a component for automobiles or other industrial component, various materials such as an acrylic rubber, a silicone rubber, an ethylene propylene rubber and a fluororubber are employed. Among them, for a rubber hose for an intercooler of a Diesel engine, the blow-by gas resistance is required. The blow-by gas is a high temperature mixed gas comprising combustion gas, unburned gas, oil mist etc. emitted from the engine. For a material which suits this application, the oil resistance, the corrosive gas resistance, etc. are required in addition to the heat resistance. A fluororubber is excellent in the heat resistance, the oil resistance, the chemical resistance etc. and accordingly provides a rubber hose having excellent characteristics suitable for the above application (for example, JP-A-2001-233918). However, a fluororubber is expensive, and thus the cost of the rubber hose tends to be high, such being problematic.

It is an object of the present invention to provide a rubber hose which is excellent in the blow-by gas resistance and is available at a low cost.

### DISCLOSURE OF THE INVENTION

The present invention provides a laminated rubber hose comprising an inner layer made of a fluororubber composition and an outer layer made of a silicone rubber composition, co-vulcanized, wherein the peel strength in accordance with JIS K6854-1973 between the inner layer and the outer layer after the co-vulcanization is at least 8 N/cm, and wherein the silicone rubber composition contains cerium oxide, iron oxide or a mixture thereof.

Further, the present invention provides the above laminated rubber hose, wherein the laminated rubber hose is a rubber hose for an intercooler of a Diesel engine.

### BRIEF EXPLANATION OF THE DRAWINGS

Fig. 1 is a cross-sectional view illustrating a testing apparatus for the blow-by gas resistance of a laminated rubber sheet.

Fig. 2 is a cross-sectional view illustrating a laminated rubber hose at the blow-by gas resistance test. Explanation of Numerical References
1: vulcanized rubber sheet
2: stainless steel container
3: model liquid of blow-by gas
4: vulcanized rubber hose
5: stopper
6: rubber hose fastening plate

### MODE FOR CARRYING OUT THE INVENTION

The fluororubber in the present invention may be an elastic copolymer of fluoromonomers or an elastic copolymer of a fluoromonomer and a hydrocarbon monomer. The fluoromonomer may, for example, be a fluoroethylene such as vinylidene fluoride, trifluoroethylene, trifluorochloroethylene, tetrafluoroethylene or vinyl fluoride, a fluoropropylene such as hexafluoropropylene or pentafluoropropylene, or a perfluoro(alkyl vinyl ether) such as perfluoro(methyl vinyl ether) or perfluoro(propyl vinyl ether). The fluoromonomer may be used alone, or two or more of them may be used in combination.

The hydrocarbon monomer may, for example, be an olefin such as ethylene or propylene, a vinyl ether such as methyl vinyl ether or ethyl vinyl ether, a vinyl ester such as vinyl acetate or an acrylate such as methyl acrylate. The hydrocarbon monomer may be used alone, or two or more of them may be used in combination.

Further, in the present invention, as the fluororubber, a copolymer comprising the above fluoromonomer and hydrocarbon monomer, and in addition, other monomer to be a vulcanization site copolymerized therewith in a small amount, may also be used. Said other monomer may be a monomer containing an iodine atom such as 2-iodoperfluoropropene or 4-iodoperfluorobutene-1, or a monomer containing a bromine atom such as bromotrifluoroethylene or 4-bromo-3,3,4,4-tetrafluorobutene-1.

Specific examples of the fluororubber in the present invention include a vinylidene fluoride/hexafluoropropylene elastic copolymer, a vinylidene fluoride/hexafluoropropylene/tetrafluoroethylene elastic copolymer, a tetrafluoroethylene/propylene elastic copolymer and a tetrafluoroethylene/vinylidene fluoride/propylene elastic copolymer. The fluororubber may be used alone, or two or more of them may be used in combination. Among them, preferred is a tetrafluoroethylene/propylene elastic copolymer or a tetrafluoroethylene/vinylidene fluoride/propylene elastic copolymer excellent in the blow-by gas resistance.

As the method for vulcanizing the fluororubber in the present invention, vulcanization with an organic peroxide, vulcanization with a polyol comprising a vulcanizing agent such as bisphenol AF and a vulcanization aid such as a quaternary ammonium salt combined, or vulcanization with an amine employing e.g. hexamethylenediamine dicarbamate may, for example, be mentioned. Among them, vulcanization with an organic peroxide is preferred since the vulcanized fluororubber will be excellent in the blow-by gas resistance.

In the present invention, in order to vulcanize the fluororubber with an organic peroxide, it is preferred to introduce a vulcanization site to the fluororubber by a method of e.g. copolymerizing a monomer containing an iodine atom or a bromine atom to be a vulcanization site, adding a chain transfer agent containing an iodine atom or a bromine atom such as 1,4-diiodoperfluorobutane or 1-bromo-4-iodoperfluorobutane at the time of polymerization, or subjecting the fluororubber to an alkali treatment or a heat treatment.

The silicone rubber in the present invention may, for example, be dimethyl silicone rubber, methyl vinyl silicone rubber, methyl phenyl silicone rubber or fluorosilicone rubber. Particularly preferred is dimethyl silicone rubber. As the method for vulcanizing the silicone rubber, vulcanization with an organic peroxide is preferred.

In the present invention, the silicone rubber composition contains cerium oxide, iron oxide or a mixture thereof. When cerium oxide, iron oxide or a mixture thereof is contained, the laminated rubber hose will be excellent in the heat aging resistance. The content of the cerium oxide, the iron oxide or the mixture thereof is preferably from 0.1 to 10 parts by mass, more preferably from 0.5 to 5 parts by mass per 100 parts by mass of the silicone rubber. When the content is within this range, the laminated rubber hose will be excellent in the heat aging resistance, and the peel strength between the inner layer made of the fluororubber composition and the outer layer made of the silicone rubber composition, co-vulcanized, is less likely to decrease for a long time even at a high temperature.

In the present invention, the co-vulcanization of the inner layer made of the fluororubber composition and the outer layer made of the silicone rubber composition is preferably vulcanization with an organic peroxide. A laminated rubber hose comprising a fluororubber inner layer and a silicone rubber outer layer co-vulcanized with an organic peroxide is particularly excellent in the blow-by gas resistance.

The organic peroxide to be used for the vulcanization with an organic peroxide may, for example, be dibenzoyl peroxide, dicumyl peroxide, di(tert-butyl) peroxide, tert-butyl peroxyacetate, tert-butyl peroxyisopropyl carbonate, tert-butyl peroxybenzoate, 2,5-dimethyl-2,5-bis(tert-butylperoxy)hexane, 2,5-dimethyl-2,5-bis(tert-butylperoxy)hexyne-3, α,α'-bis(tert-butylperoxy)-p-diisopropylbenzene or 2,5-dimethyl-2,5-bis(benzoylperoxy)hexane. They may be used alone or two or more of them may be used in combination.

The blending amount of the organic peroxide is preferably from 0.01 to 10 parts by mass, more preferably from 0.1 to 5 parts by mass per 100 parts by mass of the fluororubber. Further, it is preferably from 0.01 to 10 parts by mass, more preferably from 0.1 to 5 parts by mass per 100 parts by mass of the silicone rubber. Within this range, the laminated rubber hose will be excellent in the adhesive force between the fluororubber layer and the silicone rubber layer, and will be excellent in strength.

In the present invention, when the fluororubber composition and the silicone rubber composition are co-vulcanized with an organic peroxide, a compound having at least two unsaturated bonds in one molecule may be blended as a vulcanization aid. Said compound may, for example, be triallyl cyanurate, triallyl isocyanurate, bismaleimide, ethylene glycol dimethacrylate, 1,4-butanediol dimethacrylate, trimethylolpropane trimethacrylate or divinylbenzene. Among them, preferred is triallyl cyanurate or triallyl isocyanurate. The blending amount of the vulcanization aid is preferably from 0.1 to 10 parts by mass, more preferably from 0.5 to 7 parts by mass per 100 parts by mass of the fluororubber or the silicone rubber.

In the present invention, it is also preferred to blend a nitrogen-containing compound such as an amine or an imine with the fluororubber composition. A laminated rubber hose obtained by blending a nitrogen-containing compound will be excellent in the adhesive force between the fluororubber inner layer and the silicone rubber outer layer. Specific examples of the nitrogen-containing compound include 1,8-diazabicyclo[5.4.0]undecene-7, 1,5-diazabicyclo[4.3.0]nonene-5, 1,4-diazabicyclo[2.2.2]octane, triethylamine, tributylamine, diphenylamine, piperidine, morpholine, pyridine, benzotriazole and p-dimethylaminopyridine. The blending amount of the nitrogen-containing compound is preferably from 0.01 to 2 parts by mass, more preferably from 0.05 to 1 part by mass per 100 parts by mass of the fluororubber.

In the present invention, with the fluororubber composition and the silicone rubber composition, in addition to the above compounding agent, other compounding agent may be blended as the case requires. Said other compounding agent may, for example, be a filler, a processing aid, an adhesion aid or a pigment.

The filler may, for example, be carbon black, fumed silica, wet silica, fine quartz powder, diatomaceous earth, zinc oxide, basic magnesium carbonate, activated calcium carbonate, magnesium silicate, aluminum silicate, titanium dioxide, talc, mica powder, aluminum sulfate, calcium sulfate, barium sulfate, asbestos, graphite, wollastonite, molybdenum disulfide, carbon fiber, aramid fiber, whiskers and glass fiber.

The processing aid may, for example, be a fatty acid derivative such as sodium stearate or amide stearate, natural wax or synthetic wax.

The adhesion aid may, for example, be a silane coupling agent or a titanate type coupling agent.

As the method for producing the laminated rubber hose of the present invention, conventional rubber processing method and molding method are employed. As a specific example, a fluororubber or a silicone rubber and the above compounding agents are kneaded by means of a conventional kneader such as a twin roll or a Banbury mixer to obtain a fluororubber composition or a silicone rubber composition. Then, the obtained fluororubber composition and silicone rubber composition are co-extruded to obtain a non-vulcanized laminated rubber sheet. Then, the non-vulcanized laminated rubber sheet is superposed by means of e.g. a tubular mandrel, followed by co-vulcanization under a pressure of preferably from 0.2 to 10 MPa at a temperature of preferably from 100 to 300°C to obtain a laminated rubber hose.

Otherwise, it is also preferred to co-extrude the fluororubber composition and the silicone rubber composition to obtain a non-vulcanized laminated rubber hose, followed by co-vulcanization under the same conditions as mentioned above to obtain a laminated rubber hose. In such production methods, the inner layer made of the fluororubber composition and the outer layer made of the silicone rubber composition are co-vulcanized in direct contact with each other to obtain a multi-layer rubber hose.

Of the laminated rubber hose of the present invention, the peel strength between the inner layer made of a fluororubber composition and the outer layer made of a silicone rubber composition after the co-vulcanization is at least 8 N/cm. If the strength is less than this value, the heat aging resistance of the peel strength between the fluororubber layer and the silicone rubber layer of the laminated rubber hose is insufficient as a rubber hose for an intercooler of a Diesel engine. It is preferably at least 10 N/cm. Further, the peel strength is more preferably at least 8 N/cm even after heat aging at 200°C for 70 hours, most preferably at least 10 N/cm.

As the laminated rubber hose of the present invention, in addition to a two-layer rubber hose comprising a vulcanized fluororubber inner layer and a vulcanized silicone rubber outer layer, a multi-layer rubber hose structure such as a three-layer rubber hose comprising a vulcanized fluororubber inner layer, a vulcanized silicone rubber outer layer and a vulcanized silicone rubber outermost layer or a three-layer rubber hose comprising a vulcanized fluororubber inner layer, a vulcanized silicone rubber outer layer and a reinforced fiber layer may also be employed. It is preferred that the vulcanized silicone rubber layer is reinforced by fibers. Further, usually the vulcanized fluororubber layer and the vulcanized silicone rubber layer are directly bonded by vulcanization, however, an adhesive layer such as a primer may be present between the layers.

As the reinforcing fibers for the laminated rubber hose, aramid fibers, metaaramid fibers may, for example, be mentioned. As commercial available products, Technora (tradename, manufactured by TEIJIN LIMITED), Nomex (tradename, manufactured by DuPont) may, for example, be mentioned.

Of the laminated rubber hose of the present invention, the thickness of the fluororubber layer is preferably from 0.5 to 2 mm, more preferably from 0.8 to 1.5 mm. Further, the thickness of the silicone rubber layer is preferably from 1 to 8 mm, more preferably from 2 to 5 mm. The inner diameter of the rubber hose for an intercooler is preferably from 30 to 200 mm, more preferably from 60 to 120 mm.

The blow-by gas resistance of the laminated rubber hose of the present invention is preferably at most 50 mg/cm², more preferably at most 20 mg/cm², most preferably at most 10 mg/cm², as the mass of a model liquid which passed through the rubber hose per unit surface area, as measured by a method of employing a model liquid as mentioned hereinafter.

The laminated rubber hose of the present invention is suitable for a rubber hose for an intercooler of a Diesel engine. Further, its application may, for example, be a rubber hose to be used for chemical plant equipment, food plant equipment, food equipment, atomic power plant equipment, general industrial equipment etc., or a rubber hose to be used for vehicle such as an automobile, a ship or an aircraft. Specific examples include a steam resistant rubber hose, an oil resistant rubber hose, a combustion gas resistant rubber hose, a break oil resistant rubber hose, a chemical resistant rubber hose and a flon resistant rubber hose.

Now, the present invention will be specifically explained with reference to Examples, however, the present invention is by no means restricted thereto.

### EXAMPLES

### Preparation of Non-Vulcanized Rubber Sheets of Fluororubbers 1 to 3 and Silicone Rubbers 1 and 2

A rubber and various compounding agents were uniformly kneaded in a blending formulation as shown in Table 1 by mass ratio by means of a twin roll to prepare non-vulcanized rubber sheets of non-vulcanized fluororubber compositions 1 to 3 and non-vulcanized silicone rubber compositions 1 and 2. The thickness of the non-vulcanized rubber sheets of the fluororubber compositions 1 to 3 was 1 mm, and the thickness of the non-vulcanized rubber sheets of the silicone rubber compositions 1 and 2 was 3 mm.

Abbreviations in Table 1 are as follows. AFLAS 150E: tetrafluoroethylene/propylene elastic copolymer (tradename for a fluororubber manufactured by Asahi Glass Company, Limited), G902: vinylidene fluoride/hexafluoropropylene/tetrafluoroethylene elastic copolymer (fluororubber manufactured by DAIKIN INDUSTRIES, LTD.), KE582-U (silicone rubber manufactured by Shin-Etsu Chemical Co., Ltd.), TAIC: triallyl isocyanurate (manufactured by Nippon Kasei Chemical Co., Ltd.), Perkadox 14: α,α'-bis(tert-butyl peroxy)-p-diisopropylbenzene(tradename, manufactured by Kayaku Akzo Corporation), DBU: 1,8-diazabicyclo[5.4.0]undecene-7.

**TABLE 1**

| | Fluororubber composition 1 | Fluororubber composition 2 | Fluororubber composition 3 | Silicone rubber composition 1 | Silicone rubber composition 2 |
|---|---|---|---|---|---|
| AFLAS 150E | 100 | 100 | | | |
| G902 | | | 100 | | |
| KE582-U | | | | 100 | 100 |
| Na stearate | 1 | 1 | 1 | | |
| MT carbon | 30 | 30 | 30 | | |
| TAIC | 5 | 5 | 5 | | |
| Perkadox 14 | 1 | 1 | 1 | 1 | 1 |
| DBU | | 0.2 | | | |
| Cerium oxide | | | | | 1 |

### Preparation of Laminated Rubber Sheet

The non-vulcanized rubber sheet of the fluororubber composition and the non-vulcanized rubber sheet of the silicone rubber composition were superposed one on the other, followed by press vulcanization at a temperature of 170°C under a pressure of 1 MPa for 20 minutes to obtain a laminated rubber sheet.

### Peel Test

The laminated rubber sheet was cut into a width of 1 cm, and subjected to a test for determination of peel strength between the fluororubber layer and the silicone rubber layer in accordance with JIS K6854-1973. In a case where the test sample was a laminated rubber hose, a sample obtained by cutting the laminated rubber hose lengthwise into a sheet was employed.

### Blow-By Gas Resistance Test

### Test Employing Laminated Rubber Sheet:

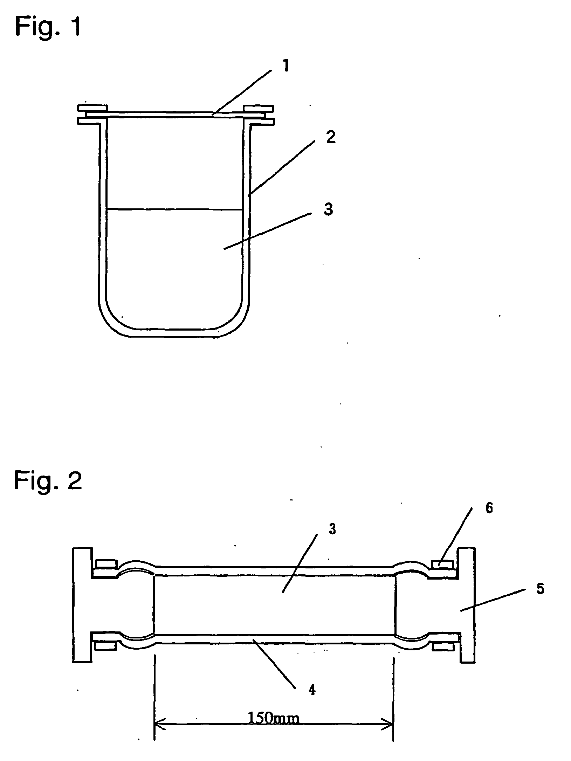

In a stainless steel container 2 having a diameter of 140 mm and a height of 280 mm as shown in Fig. 1, 1 kg of a mixed liquid of gas oil/Diesel oil (CF10W-30, manufactured by Nisseki Mitsubishi Oil Corporation)/distilled water=45/45/10 (vol%) was put as a model liquid 3 of blow-by gas, and the container was sealed with a laminated rubber sheet 1 so that the fluororubber layer faced inside. Then, the sealed container was heated in an oven of 125°C for 168 hours, and then the mass reduction amount of the mixed liquid in the container was measured. The mass of the model liquid which passed through the laminated rubber sheet per unit surface area was calculated from the mass reduction amount. Further, after the test, the peel test of the laminated rubber sheet used for the test was carried out. A small gas reduction amount indicates excellent blow-by gas resistance (engine exhaust gas resistance).

### Test Employing Laminated Rubber Hose:

As shown in Fig. 2, each end of a laminated rubber hose 4 (inner diameter: 50 mm) was sealed with a stopper 5 so that the effective length of the rubber hose would be 150 mm, and each edge of the vulcanized rubber hose was fixed by a hose fastening plate 6. 250 g of the above model liquid 3 of blow-by gas was enclosed in the laminated rubber hose 4. The laminated rubber hose 4 was put in an oven of 125°C and heated for 168 hours, and then the mass reduction amount was measured and the peel test of the laminated rubber hose 4 after the test was carried out in the same manner as mentioned above.

### Heat Aging Resistance Test:

The laminated rubber sheet was cut into a width of 1 cm and held in an oven of 200°C for 70 hours, and then the peel test between the fluororubber layer and the silicone rubber layer was carried out in the same manner as mentioned above.

### EXAMPLES 1 to 3

Each of the non-vulcanized rubber sheets of the fluororubber compositions 1 to 3 and the non-vulcanized rubber sheet of the silicone rubber composition 1 were bonded by vulcanization to prepare laminated rubber sheets. The thickness of the vulcanized fluororubber layer was 1 mm, and the thickness of the vulcanized silicone rubber layer was 3 mm. The laminated rubber sheets were subjected to the peel test between the fluororubber layer and the silicone rubber layer. Further, the blow-by gas resistance test of the laminated rubber sheets was carried out by using the apparatus as shown in Fig. 1. Further, after the blow-by gas resistance test, the peel test of the laminated rubber sheets after the test was carried out. The results are shown in Table 2.

### COMPARATIVE EXAMPLE 1

By using a vulcanized fluororubber sheet having a thickness of 1 mm, obtained by press vulcanization of the non-vulcanized rubber sheet of the fluororubber composition 3 at 170°C for 20 minutes, the blow-by gas resistance test was carried out. The result is shown in Table 2.

### COMPARATIVE EXAMPLE 2

By using a vulcanized silicone rubber sheet having a thickness of 3 mm, obtained by press vulcanization of the non-vulcanized rubber sheet of the silicone rubber composition 1 at 170°C for 20 minutes, the blow-by gas resistance test was carried out. The result is shown in Table 2.

**TABLE 2**

| | Ex. 1 | Ex. 2 | Ex. 3 | Comp. Ex. 1 | Comp. Ex. 1 |
|---|---|---|---|---|---|
| Vulcanized rubber sheet | Fluororubber composition 1/ silicone rubber composition 1 | Fluororubber composition 2/ silicone rubber composition 1 | Fluororubber composition 3/ silicone rubber composition 1 | Fluororubber composition 3 | Silicone rubber composition 1 |
| Initial peel strength (N/cm) | 18 | 24 | 15 | - | - |
| Mass reduction amount after blow-by gas resistance test (mg/cm²) | 3.5 | 3.2 | 3.2 | 3.2 | 162.5 |
| Peel strength after test (N/cm) | 18 | 23 | 12 | - | - |

### EXAMPLES 4 to 6

Each of the fluororubber compositions 1, 2 and 3 and the silicone rubber composition 1, each obtained by kneading by a twin roll, were co-extruded by a co-extruder to obtain non-vulcanized laminated rubber sheets, and each of the non-vulcanized laminated rubber sheets was superposed on a tubular mandrel, followed by steam vulcanization at 160°C for 30 minutes to obtain laminated rubber hoses comprising an inner layer made of a fluororubber and an outer layer made of a silicone rubber, having an outer diameter of 58 mm and an inner diameter of 50 mm. The thickness of each of the inner layers made of the vulcanized fluororubbers 1, 2 and 3 was 1 mm, and the thickness of the outer layer made of the vulcanized silicone rubber 1 was 3 mm. The peel test, the blow-by gas resistance test of the laminated rubber hose as shown in Fig. 2 and the peel test of the laminated rubber hose after the test were carried out. The results are shown in Table 3.

### COMPARATIVE EXAMPLE 3

Using a non-vulcanized rubber sheet of the fluororubber composition 3 having a thickness of 1 mm, vulcanization was carried out on a tubular mandrel in the same manner as in Example 4 to obtain a vulcanized fluororubber hose having a thickness of 1 mm. The blow-by gas resistance test and the peel test were carried out in the same manner as in Example 4. The results are shown in Table 3.

**TABLE 3**

| | Ex. 4 | Ex. 5 | Ex. 6 | Comp. Ex. 3 |
|---|---|---|---|---|
| Vulcanized rubber hose | Fluororubber composition 1/ silicone rubber composition 1 | Fluororubber composition 2/ silicone rubber composition 1 | Fluororubber composition 3/ silicone rubber composition 1 | Fluororubber composition 3 |
| Initial peel strength (N/cm) | 17 | 22 | 14 | - |
| Mass reduction amount after blow-by gas resistance test (mg/cm²) | 4.2 | 4.3 | 4.5 | 4.7 |
| Peel strength after test (N/cm) | 16 | 23 | 12 | - |

### EXAMPLES 7 and 8

The non-vulcanized rubber sheet of the fluororubber composition 2 and each of the non-vulcanized rubber sheets of the silicone rubber compositions 1 and 2 were bonded by vulcanization to prepare laminated rubber sheets. The thickness of the vulcanized fluororubber layer was 1 mm, and the thickness of the vulcanized silicone rubber layer was 3 mm. The laminated rubber sheets were subjected to the peel test between the fluororubber layer and the silicone rubber layer and the heat aging resistance test. The results are shown in Table 4.

**TABLE 4**

| | Ex. 7 | Ex. 8 |
|---|---|---|
| Vulcanized rubber sheet | Fluororubber composition 2/ silicone rubber composition 2 | Fluororubber composition 2/ silicone rubber composition 1 |
| Peel strength (N/cm) | 40.1 | 12.7 |
| Peel strength after heat aging test (N/cm) | 25.3 | 5.0 |

### INDUSTRIAL APPLICABILITY

The laminated rubber hose of the present invention is excellent in the peel strength between the fluororubber layer and the silicone rubber layer, and is excellent in the blow-by gas resistance (engine exhaust gas resistance). Further, it is excellent also in the heat resistance, the oil resistance and the chemical resistance, and thus it is useful for an application to e.g. a rubber hose for an intercooler of a Diesel engine.

## Claims

1. A laminated rubber hose comprising an inner layer made of a fluororubber composition and an outer layer made of a silicone rubber composition, co-vulcanized, wherein the peel strength in accordance with JIS K6854-1973 between the inner layer and the outer layer after the co-vulcanization is at least 8 N/cm, and wherein the silicone rubber composition contains cerium oxide, iron oxide or a mixture thereof.

2. The laminated rubber hose according to Claim 1, wherein the co-vulcanization is vulcanization with an organic peroxide.

3. The laminated rubber hose according to Claim 1 or 2, wherein the peel strength between the inner layer and the outer layer is at least 8 N/cm after heat aging at 200°C for 70 hours.

4. The laminated rubber hose according to any one of Claims 1 to 3, wherein the inner layer has a thickness of from 0.5 to 2 mm, and the outer layer has a thickness of from 1 to 8 mm.

5. The laminated rubber hose according to any one of Claims 1 to 4, wherein the fluororubber is a tetrafluoroethylene/propylene elastic copolymer or a tetrafluoroethylene/vinylidene fluoride/propylene elastic copolymer.

6. The laminated rubber hose according to any one of Claims 1 to 5, wherein the silicone rubber is dimethyl silicone rubber.

7. The laminated rubber hose according to any one of Claims 1 to 6, wherein the laminated rubber hose is a rubber hose for an intercooler of a Diesel engine.

## Patentansprüche

1. Laminierter Kautschuk- bzw. Gummischlauch, umfassend eine innere Schicht aus einer Fluorkautschukzusammensetzung und eine äußere Schicht aus einer Silikonkautschukzusammensetzung, co-vulkanisiert, wobei die Abziehfestigkeit gemäß JIS K6854-1973 zwischen der inneren Schicht und der äußeren Schicht nach der Co-Vulkanisation mindestens 8 N/cm beträgt, und wobei die Silikonkautschukzusammensetzung Ceroxid, Eisenoxid oder ein Gemisch davon enthält.

2. Laminierter Kautschukschlauch gemäß Anspruch 1, wobei die Co-Vulkanisation Vulkanisation mit einem organischen Peroxid ist.

3. Laminierter Kautschukschlauch gemäß Anspruch 1 oder 2, wobei die Abziehfestigkeit zwischen der inneren Schicht und der äußeren Schicht mindestens 8 N/cm nach Wärmealterung bei 200°C für 70 Stunden beträgt.

4. Laminierter Kautschukschlauch gemäß einem der Ansprüche 1 bis 3, wobei die innere Schicht eine Dicke von 0,5 bis 2 mm aufweist, und die äußere Schicht eine Dicke von 1 bis 8 mm aufweist.

5. Laminierter Kautschukschlauch gemäß einem der Ansprüche 1 bis 4, wobei der Kautschukschlauch ein Tetrafluorethylen/Propylen-elastisches Copolymer oder ein Tetrafluorethylen/Vinylidenfluorid/Propylen-elastisches Copolymer ist.

6. Laminierter Kautschukschlauch gemäß einem der Ansprüche 1 bis 5, wobei der Silikonkautschuk Dimethylsilikonkautschuk ist.

7. Laminierter Kautschukschlauch gemäß einem der Ansprüche 1 bis 6, wobei der laminierte Kautschukschlauch ein Kautschukschlauch für einen Zwischenkühler eines Dieselmotors ist.

## Revendications

1. Tuyau flexible en caoutchouc stratifié comprenant une couche intérieure constituée d'une composition de caoutchouc fluoré, et une couche extérieure constituée d'une composition de caoutchouc de silicone, covulcanisées, dans lequel la résistance au pelage, selon la norme JIS K6854-1973, entre la couche intérieure et la couche extérieure après la covulcanisation est d'au moins 8 N/cm, et dans lequel la composition de caoutchouc de silicone contient de l'oxyde de cérium, de l'oxyde de fer, ou un mélange de ceux-ci.

2. Tuyau flexible en caoutchouc stratifié selon la revendication 1, dans lequel la covulcanisation est une vulcanisation avec un peroxyde organique.

3. Tuyau flexible en caoutchouc stratifié selon la revendication 1 ou 2, dans lequel la résistance au pelage entre la couche intérieure et la couche extérieure est d'au moins 8 N/cm après un vieillissement thermique à 200°C pendant 70 heures.

4. Tuyau flexible en caoutchouc stratifié selon l'une quelconque des revendications 1 à 3, dans lequel la couche intérieure a une épaisseur de 0,5 à 2 mm, et la couche extérieure a une épaisseur de 1 à 8 mm.

5. Tuyau flexible en caoutchouc stratifié selon l'une quelconque des revendications 1 à 4, dans lequel le caoutchouc fluoré est un copolymère élastique de tétrafluoroéthylène/propylène ou un copolymère élastique de tétrafluoroéthylène /fluorure de vinylidène/propylène.

6. Tuyau flexible en caoutchouc stratifié selon l'une quelconque des revendications 1 à 5, dans lequel le caoutchouc de silicone est un caoutchouc de diméthylsilicone.

7. Tuyau flexible en caoutchouc stratifié selon l'une quelconque des revendications 1 à 6, lequel tuyau flexible en caoutchouc stratifié est un tuyau flexible en caoutchouc pour un refroidisseur intermédiaire d'un moteur Diesel.
